# EUROPÄISCHE PATENTSCHRIFT

(11) **EP 1 976 025 B1**
(45) Veröffentlichungstag und Bekanntmachung des Hinweises auf die Patenterteilung: **03.11.2010**
(21) Anmeldenummer: 07122943.9
(22) Anmeldetag: 11.12.2007
(51) Int. Cl.: H01L 31/048

(54) **Paneldose**
Junction box
Boîte de panneau

(30) Priorität: 28.03.2007 DE 102007015315; 02.05.2007 DE 102007020843
(43) Veröffentlichungstag der Anmeldung: 01.10.2008
(73) Patentinhaber: Günther Spelsberg GmbH & Co. KG, 58579 Schalksmühle (DE); Multi-Holding AG, 4123 Allschwil (CH)
(72) Erfinder: GERULL, Walter, 58579, Schalksmühle (DE); BÜRGE-ALLENSPACH, Anton, 4466 Ormalingen (CH)
(74) Vertreter: Michalski Hüttermann & Partner Patentanwälte

(56) Entgegenhaltungen:
- EP-A- 0 999 601
- WO-A-2006/074561
- US-B1- 6 582 249

## Beschreibung

Die Erfindung betrifft eine Paneldose, zum elektrischen Anschluss eines Photovoltaik-Moduls für eine Solaranlage, mit einem Basisteil zum Anbringen auf dem Photovoltaik-Modul und zum elektrischen Anschließen einer Anschlussleitung des Photovoltaik-Moduls und mit einem weiteren Teil zum Aufsetzen auf das Basisteil. Eine derartige Paneldosen ist z. B. aus der EP 1 672 7U2 A1 bekannt.

Ein Photovoltaik-Modul besteht im Allgemeinen aus zusammengeschalteten Solarzellen und wird auch Solarzellenpanel genannt. Die Ausgangsspannung eines einzelnen Photovoltaik-Moduls ist im Allgemeinen zu gering, um elektrische Geräte zu betreiben, so dass in Solaranlagen mehrere Photovoltaik-Module zusammengeschaltet werden. Im Allgemeinen werden die Photovoltaik-Module dabei in Reihe geschaltet. Dabei kann sich jedoch ein Problem ergeben, wenn ein Photovoltaik-Modul partiell abgeschattet wird. Bekanntermaßen erzeugt ein abgeschattetes Photovoltaik-Modul keine Spannung mehr und setzt dem Stromfluss praktisch eine Diode in Sperrichtung entgegen. Damit kann jedoch insgesamt kein Strom mehr fließen, so dass die Funktion der gesamten Anlage beeinträchtigt ist.

Um diesem Problem abzuhelfen, werden bei der Zusammenschaltung von Photovoltaik-Modulen zu einer Solaranlage in Paneldosen vorgesehene Bypass-Dioden verwendet, die antiparallel zu den Photovoltaik-Modulen geschaltet werden. Auf diese Weise wird erreicht, dass ein abgeschattetes Photovoltaik-Modul zwar keinen Anteil mehr zur Gesamtspannung der Solaranlage mehr leistet, der Stromfluss insgesamt jedoch trotzdem erhalten bleibt, so dass sich lediglich eine verminderte Betriebsspannung ergibt. Eine Beschädigung des abgeschatteten Photovoltaik-Moduls wird damit ebenfalls vermieden.

Bei herkömmlichen Paneldosen wird bisher derart vorgegangen, dass diese vollständig bestückt, also insbesondere mit wenigstens einer Bypass-Diode und mit Anschlusskabeln für das Photovoltaik-Modul versehen, auf diesem befestigt werden. Über einen abnehmbaren Deckel ist das Innere der Paneldose zugänglich, so dass Anschlussleitungen des Photovoltaik-Moduls angeschlossen werden können. Ferner erhält man auf diese Weise Zugang zu den Bypass-Dioden, die auf diese Weise bei einem Defekt gewechselt werden könnten.

In diesem Zusammenhang sei darauf hingewiesen, dass vorliegend mit "Anschlussleitung" eine Leitung gemeint ist, die direkt mit den Solarzellen verbunden ist und zum elektrischen Anschließen des Photovoltaik-Moduls aus diesem herausgeführt und dort weiter kontaktierbar ist. Im Gegensatz dazu ist vorliegend mit "Anschlusskabel" ein Kabel gemeint, das der Paneldose verbraucherseitig oder von einem anderen Photovoltaik-Modul her zugeführt ist und in der Paneldose weiter kontaktiert wird.

Ein Wechsel von Bypass-Dioden bei einer sich bereits im Betrieb befindlichen Solaranlage wird im Allgemeinen jedoch nicht durchgeFührt. Da sich die Photovoltaik-Module häufig an nur schlecht zugänglichen Orten, wie auf Häuserdächern, befinden, wäre ein Austausch sehr aufwendig und mitunter auch gefährlich. Auch ein Austausch der gesamten Paneldose ist nicht unproblematisch, da beim Wechsel der Dose häufig keine Abdichtung der Austrittsstellen der Anschlussleitungen des Photovoltaik-Moduls mehr gewährleistet werden kann.

Im Ergebnis wird daher bei einem Defekt in der Paneldose häufig das gesamte Photovoltaik-Modul ausgetauscht. Wenn damit auch ein zuverlässiger Weiterbetrieb der Solaranlage gewährleistet werden kann, so ist dies jedoch ineffizient und teuer.

EP 0 999 601 A1 beschreibt eine Anschlussdose, umfassend einem Gehäuse und einem Deckel, welcher eine Abdeckung, Anschlussklemmen, und Bypass-Dioden aufweist. Kabeln führen durch an das Gehäuse angeordnete Löcher in die Abdeckung. Des Weiteren weist das Gehäuse Anschlüsse und einen wasserdichten Dichtring, welcher in einer Randnut des Gehäuses angeordnet ist, auf. Die Anschlussklemmen der Abdeckung und die Anschlüsse des Gehäuses werden bei einem Anbringen des Deckels auf das Gehäuse elektrisch kontaktiert.

US 6,582,249 B1 beschreibt eine Vorrichtung zum Kontaktieren mit einem Folienleiter, insbesondere ein Solarmodul. Die Vorrichtung umfasst ein Gehäuse, welches einerseits an dem Folienleiter angeordnet werden kann und andererseits eine Steckverbindung, um eine elektrische Verbindung mit dem Folienleiter herzustellen. Des Weiteren weist das Gehäuse einen Terminalbereich auf, um elektronische Module, insbesondere eine Diode, aufzunehmen.

Es ist die Aufgabe der Erfindung, eine derartige Paneldose anzugeben, die einfach installierbar ist und darüber hinaus auf einfache Weise im Falle eines Defekts den Austausch einer defekten Komponente ermöglicht.

Ausgehend von der eingangs beschriebenen Paneldose ist diese Aufgabe durch die Merkmale des Anspruchs 1 gelöst.

Die erfindungsgemäße Paneldose bedeutet damit eine vollständige Abkehr von der herkömmlichen Vorgehensweise, gemäß der ein Gehäuse der Paneldose mit allen erforderlichen Komponenten auf dem Photovoltaik-Modul befestigt wird. Erfindungsgemäß stellt das Basisteil nämlich lediglich die Basis zum Anschließen wenigstens einer Anschlussleitung des Photovoltaik-Moduls und zum Befestigen des Funktionsteils an dem Photovoltaik-Modul dar. Eine eine elektrische oder/und elektronische Funktion übernehmende Funktionseinrichtung muss dabei nicht in dem Basisteil vorgesehen sein. Eine solche Funktionseinrichtung ist vielmehr in dem auf dem Basisteil befestigbaren Funktionsteil vorgesehen, so dass im Falle eines Defekts der Funktionseinrichtung das Funktionsteil insgesamt auf einfache Weise gewechselt werden kann, ohne dabei z. B. die weiter oben angesprochene Abdichtung des Photovoltaik-Moduls zu gefährden. Darüber hinaus ist ein Wechsel des an dem Basisteil befestigten Funktionsteils auch relativ einfach möglich, so dass dies auch an schwierig zugänglichen Stellen, wie auf Häuserdächern, durchgeführt werden kann. Insbesondere ist vorzugsweise vorgesehen, dass das Basisteil zumindest keine Anschlusskabel aufweist, was die Installation auf dem Photovoltaik-Modul, insbesondere bei Automatisierung derselben, erheblich erleichtert.

Grundsätzlich ist es denkbar, das Funktionsteil auf verschiedene Weisen auf dem Photovoltaik-Modul zu befestigen. Gemäß einer bevorzugten Weiterbildung der Erfindung ist jedoch vorgesehen, dass das Funktionsteil ausschließlich mittels des Basisteils an dem Photovoltaik-Modul befestigbar ist. Dies hat den Vorteil, dass am Photovoltaik-Modul selbst nach Anbringung des Basisteils keine Maßnahmen mehr vorgenommen werden müssen, um die Paneldose vollständig zu befestigen. Vielmehr stellt das Basisteil alle erforderlichen Funktionen hinsichtlich Befestigung und elektrischem Anschluss bereit, so dass Anschluss und Befestigung auch zu keiner Beschädigung des Photovoltaik-Moduls führen können.

Als Funktionseinrichtungen können verschiedene Einrichtungen vorgesehen sein. Gemäß einer bevorzugten Weiterbildung der Erfindung ist als Funktionseinrichtung eine Bypass-Diode vorgesehen. Zusätzlich oder alternativ dazu kann als Funktionseinrichtung auch eine elektrische oder elektronische Schutzschaltung für das Photovoltaik-Modul vorgesehen sein. Zuletzt sind nämlich derartige Schutzschaltungen bekannt geworden, die von ihrer Funktion her Bypass-Dioden ersetzen können, wobei jedoch wesentlich höhere Ströme absicherbar sind.

Als in dem Funktionsteil vorgesehene Funktionseinrichtung kann gemäß einer bevorzugten Weiterbildung der Erfindung auch ein Anschlusskabel für das Photovoltailc-Modul vorgesehen sein. Im Allgemeinen werden vorzugsweise wenigstens zwei Anschlusskabel vorgesehen sein. Es ist gemäß einer bevorzugten Weiterbildung der Erfindung ferner vorgesehen, dass als Funktionseinrichtung eine Anschlusseinrichtung für das Anschlusskabel vorgesehen ist.

Eine derartige Anschlusseinrichtung kann auf unterschiedliche Weisen ausgestaltet sein. Gemäß der Erfindung ist jedoch vorgesehen, dass die Anschlusseinrichtung ein Röhrchen aufweist, vorzugsweise von einem Röhrchen gebildet ist, in das eine Leitungsader des Anschlusskabel eingeführt ist. Dabei ist es gemäß einer bevorzugten Weiterbildung der Erfindung ferner vorgesehen, dass die Leitungsader im Röhrchen mittels einer Verkrimpung elektrisch kontaktiert und vorzugsweise auch gehalten ist. Das Vorsehen der Anschlusseinrichtung in Form eines entsprechenden Röhrchens ist konstruktiv sehr einfach, ermöglicht einen sicheren Anschluss der Leitungsader des Anschlusskabels und gewährleistet zusätzlich eine besonders gute Wärmeableitung. Diese besonders gute Wärmeableitung resultiert dabei einerseits daraus, dass vorzugsweise relativ massive Röhrchen verwendet werden. Andererseits gilt jedoch auch, dass für die Wärmeableitung die runde Form der Röhrchen besser ist als flache Formen.

Zum Anschließen der Anschlussleitung des Photovoltaik-Moduls können unterschiedliche Einrichtungen vorgesehen sein. Gemäß einer bevorzugten Weiterbildung der Erfindung ist jedoch vorgesehen, dass im Basisteil zum elektrischen Anschließen der Anschlussleitung des Photovoltaik-Moduls eine Verbindungseinrichtung bereitgestellt ist, mittels derer die Anschlusseinrichtung mit der Anschlussleitung verbindbar ist. Vorzugsweise erfolgt eine direkte Kontaktierung der Anschlusseinrichtung, z. B, in Form des oben angesprochenen Röhrchens, mit der Anschlussleitung des Photovoltaik-Moduls.

Gemäß einer bevorzugten Weiterbildung der Erfindung kann diesbezüglich insbesondere vorgesehen sein, dass als Verbindungseinrichtung eine Federklammer vorgesehen ist, mittels derer die Anschlussleitung an der Anschlusseinrichtung angepresst wird. Auch hier ist das Vorsehen der Anschlusseinrichtung in Form eines Röhrchens vorteilhaft da dieses senkrecht zu seiner Längserstreckung auf einfache und sichere Weise in eine entsprechend ausgestaltete Federklammer eingefügt und in dieser gehalten werden kann.

Gemäß einer bevorzugten Weiterbildung der Erfindung ist ferner vorgesehen, dass eine Bypass-Diode direkt mit der Anschlusseinrichtung verbunden ist. Insbesondere ist es dabei bevorzugt, dass die Anschlusseinrichtung ein Röhrchen mit einem abgeflachten Bereich aufweist, in dem die Bypass-Diode aufgeschweißt oder aufgelötet sein kann.

Grundsätzlich kann das Funktionsteil unterschiedlichen geometrischen Formen folgen. Gemäß einer bevorzugten Weiterbildung der Erfindung ist jedoch vorgesehen, dass das Funktionsteil als Haube ausgebildet ist. Auf diese Weise stellt das Funktionsteil praktisch ein mit einem Deckel verschließbares Gehäuse dar, so dass insbesondere aufgrund der Seitenwände der Haube ein guter Schutz der in dem Funktionsteil vorgesehenen Funktionseinrichtungen bei Herstellung, Transport und Installation gewährleistet ist. Die Funktion des Deckel übernimmt dann das auf dem Photovoltaik-Modul befestigte Basisteil. Insbesondere ist gemäß einer bevorzugten Weiterbildung der Erfindung dabei vorgesehen, dass durch Aufsetzen des Funktionsteils auf das Basisteil die Paneldose verschließbar ist, insbesondere in hermetisch dichter Form.

Darüber hinaus ist gemäß einer bevorzugten Weiterbildung der Erfindung vorgesehen, dass die Höhe des Funktionsteils in einem Randbereich geringer ist als in seinem restlichen Bereich, das Funktionsteil also einen Absatz aufweist. Auf diese Weise kann die Paneldose z.B. teilweise unter einen das Photovoltaik-Modul begrenzenden Metallrahmen geschoben werden, so dass eine möglichst randnahe und damit platzsparende Installation auf dem Photovoltaik-Modul erzielt wird.

Wie weiter oben schon angesprochen, ist ein bei Photovoltaik-Modulen problematischer Punkt die Abdichtung des Bereichs, in dem die Anschlussleitungen aus dem Photovoltaik-Modul heraustreten. Im Allgemeinen muss dort zum Herausführen der Anschlussleitungen eine Schutzschicht verletzt werden, so dass grundsätzlich die Problematik des Eindringens von Feuchtigkeit besteht, die das Photovoltaik-Modul beschädigen kann. Insofern stellt sich auch die Aufgabe, auf sichere und einfache Weise eine feuchtigkeitsdichte Abdichtung des Bereichs des Photovoltaik-Moduls zu erzielen, in dem eine Anschlussleitung heraustritt. Gemäß einer bevorzugten Weiterbildung der Erfindung ist dazu vorgesehen, dass das Basisteil auf seiner zur Anbringung auf dem Photovoltaik-Modul vorgesehenen Seite einen Boden mit einer vergießbaren, dem Photovoltaik-Modul zugewandten Ausnehmung aufweist.

Gemäß diesem Aspekt wird also eine derartige Paneldose bereitgestellt, die eine sichere Abdichtung des Bereichs des Photovoltaik-Moduls gewährleisten kann, in dem eine Anschlussleitung aus dem Photovoltaik-Modul heraustritt. Dazu wird die Paneldose entsprechend positioniert, und die Ausnehmung wird entsprechend in abdichtender Weise mit einem Dichtmaterial vergossen.

Zum Vergießen der Ausnehmung sind grundsätzlich alle bekannten Spritz- und Gießverfahren einsetzbar. Dabei ist es gemäß einer bevorzugten Weiterbildung der Erfindung vorgesehen, dass die vergießbare Ausnehmung derart angeordnet ist, dass bei auf dem Photovoltaik-Modul angebrachtem Basisteil auch der Austrittsbereich der Anschlussleitung aus dem Photovoltaik-Modul vergießbar ist. Wesentlich ist dies insbesondere, wenn eine Mehrzahl von Anschlussleitungen vorgesehen ist, so dass dann eine entsprechend ausgestaltete gemeinsame vergießbare Ausnehmung vorgesehen ist oder mehrere vergießbare Ausnehmungen vorgesehen sind, die insgesamt alle Austrittsbereiche der Anschlussleitungen abdecken.

Grundsätzlich kann es ausreichend sein, dass die geometrische Anordnung einer vergießbaren Ausnehmung bzw. einer Mehrzahl von vergießbaren Ausnehmungen sich an den Austrittsbereichen der Anschlussleitungen aus dem Photovoltaik-Modul orientiert. Gemäß einer bevorzugten Weiterbildung der Erfindung ist jedoch ferner vorgesehen, dass die vergießbare Ausnehmung auch eine in dem Boden des Basisteils vorgesehene Durchgangsöffnung für die Anschlussleitung des Photovoltaik-Moduls umfasst. Auf diese Weise wird erreicht, dass die Durchgangsöffnung zumindest teilweise mitausgegossen wird, so dass eine optimale Abdichtungsfunktion erzielt wird. Insbesondere kann dabei, aber auch grundsätzlich bei allen vorgenannten Ausführungsformen, vorgesehen sein, dass die jeweilige Durchgangsöffnung genau über dem Austrittsbereich der Anschlussleitung des Photovoltaik-Moduls angeordnet ist, was eine besonders einfache und insbesondere auch automatisierte Einführung der Anschlussleitung in das Basisteil der Paneldose ermöglicht.

Weiterhin ist es bei Paneldosen problematisch, dass diese mitunter starken mechanischen Belastungen ausgesetzt sind, nämlich sowohl bei Transport und Installation als auch bei ihrem Einsatz im Betrieb der Solaranlage. Insbesondere bei sehr tiefen Temperaturen werden typische für Paneldosen verwendete Kunststoffmaterialien häufig spröde, so dass schon moderate Stöße zu einer Beschädigung der Paneldose führen können.

Es ist daher auch die Aufgabe der Erfindung, eine derartige Paneldose anzugeben, die gegen Stöße möglichst unempfindlich ist.

Ausgehend von der eingangs beschriebenen Paneldose ist diese Aufgabe dadurch gelöst, dass zur Abdichtung der Paneldose zwischen dem Basisteil und dem weiteren Teil eine Dichtung vorgesehen ist, die derart ausgebildet und angeordnet ist, daß ein auf das weitere Teil ausgeübter Stoß abgefedert wird.

Diese erfindungsgemäße Lösung kann sowohl für die eingangs genannte Paneldose als auch für alle zuvor genannten Ausgestaltungen dieser Paneldose vorgesehen sein.

Gemäß diesem Aspekt der Erfindung wirkt die Dichtung also nicht nur zur Abdichtung des Innenraums der Paneldose vor z. B. Feuchtigkeit, sondern gewährleistet auch einen mechanischen Schutz. Wird das auf das Basisteil aufgesetzte Teil nämlich von einem Stoß getroffen, so wird dieser mittels der Dichtung abgefedert, was insbesondere bei bei aufgrund von tiefen Temperaturen spröde gewordenem Material des weiteren Teils einer Beschädigung desselben aber auch der Paneldose insgesamt sowie der darin enthaltenen Bauteile entgegenwirken kann.

Gemäß einer bevorzugten Weiterbildung der Erfindung ist dabei vorgesehen, dass die Dichtung seitlich gegen Seitenwände des weiteren Teils abdichtet und das weitere Teil Rippen aufweist, mit denen es derart auf der Dichtung aufliegt, dass sich die Seitenwände im Abstand zum Basisteil befinden. Auf diese Weise ergibt sich eine federnde Lagerung des weiteren Teils auf dem Basisteil, bei dem die Abdichtungsfunktion, die seitlich wirkt, gegenüber der Federfunktion, die senkrecht dazu wirkt, funktional getrennt sind. Damit wird die Abdichtfunktion durch die zusätzliche Federfunktion nicht beeinträchtigt.

Nachfolgend wird die Erfindung anhand eines bevorzugten Ausführungsbeispiels unter Bezugnahme auf die Zeichnung im Detail erläutert. In der Zeichnung zeigt
- Fig. 1: eine Paneldosen gemäß einem bevorzugten Ausführungsbeispiel der Er- findung mit einem Basisteil und einem darauf aufgesetzten Funktions- teil,
- Fig. 2: das Funktionsteil der Paneldose gemäß dem bevorzugten Ausfüh- rungsbeispiel der Erfindung mit Funktionseinrichtungen,
- Fig. 3: das Basisteil der Paneldose gemäß dem bevorzugten Ausführungsbei- spiel der Erfindung,

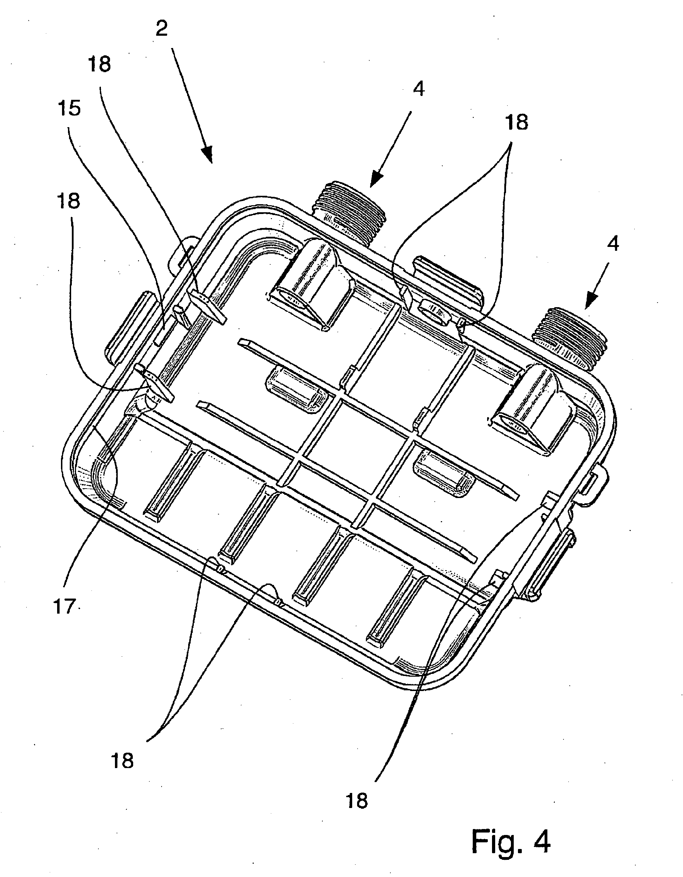

- Fig. 4: das Funktionsteil der Paneldose gemäß dem bevorzugten Ausfüh- rungsbeispiel der Erfindung ohne zusätzliche Einrichtungen,
- Fig. 5: die Trägereinrichtung mit den darin angeordneten Anschlusseinrich- tungen der Paneldose gemäß dem bevorzugten Ausführungsbeispiel der Erfindung und
- Fig. 6: das Basisteil der Paneldose gemäß dem bevorzugten Ausführungsbei- spiel der Erfindung von seiner zur Befestigung auf einem Photovol- taik-Modul vorgesehenen Seite her.

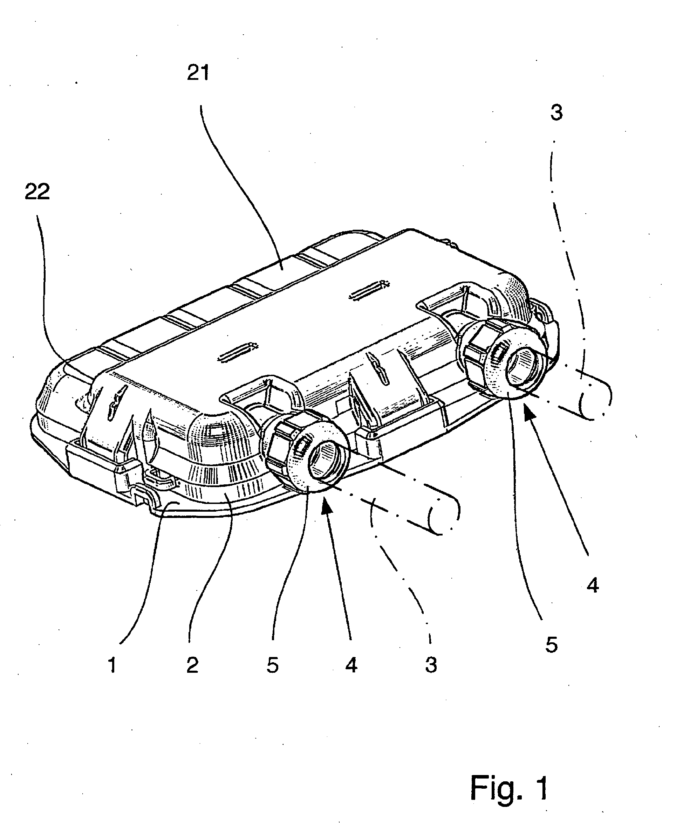

Aus Fig. 1 ist in zusammengesetztem Zustand eine Paneldose gemäß einem bevorzugten Ausführungsbeispiel der Erfindung in perspektivischer Darstellung ersichtlich. Diese Paneldose dient zum elektrischen Anschluss eines nicht weiter dargestellten Photovoltaik..Moduls einer Solaranlage, wobei ein Basisteil 1 zum Anbringen auf dem Photovoltaik-Modul und zum elektrischen Anschließen einer ebenfalls nicht weiter dargestellten Anschlussleitung des Photovoltaik-Moduls und als weiteres Teil ein Funktionsteil 2 vorgesehen sind, das auf das Basisteil 1 aufgesetzt ist.

Wie aus Fig. 1 ersichtlich, weist das Funktionsteil 2 mehrere Funktionseinrichtungen auf, die jeweils eine elektrische oder/und elektronische Funktion übernehmen. Derartige Funktionseinrichtungen stellen vorliegend z. B. zwei Anschlusskabel 3 dar, mittels derer das Photovoltaik-Modul über die Paneldose elektrisch angeschlossen werden kann. Diese Anschlusskabel 3 sind über Kabeleinführungsöffnungen 4 in das Funktionsteil 2 der Paneldose eingeführt. Als Zugentlastung ist jeweils eine Kabelverschraubung 5 vorgesehen, die auf die Isolierung des Anschlusskabels 3 wirkt.

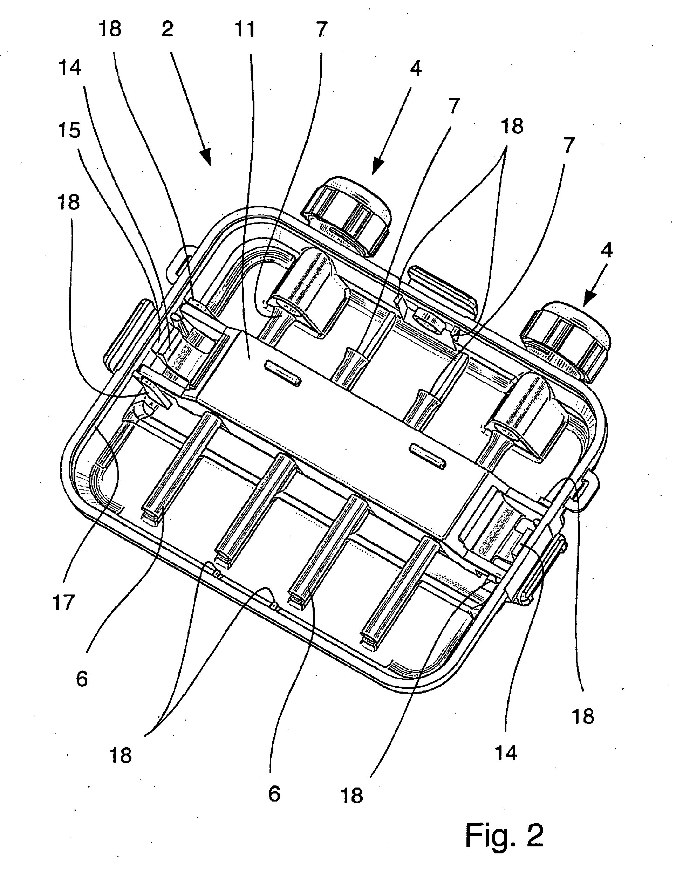

Als jeweils eine elektrische Funktion übernehmende Funktionseinrichtungen sind ferner, wie aus Fig. 2 ersichtlich, Anschlusseinrichtungen 6 in Form von Röhrchen vorgesehen. Diese Röhrchen weisen jeweils an einem Ende einen erweiterten Öffnungsbereich 7 auf, wie insbesondere Fig. 2 entnehmbar. Dabei sind zwei dieser Anschlusseinrichtungen 6 mit ihrem erweiterten Öffnungsbereich 7 jeweils so angeordnet, dass eine Leitungsader eines durch die Kabeleinführungsöffnung 4 eingeführten Anschlusskabels 3 auf einfache und sichere Weise in das Innere der Röhrchen einführbar ist. Ein elektrischer Kontakt zwischen der Leitungsader und dem Röhrchen sowie ein Halten der Leitungsader in dem Röhrchen kann dann mittels Verkrimpen erfolgen.

Ein derartiges Verkrimpen ist auch im Rahmen einer automatisierten Bestückung des Funktionsteils 2 mittels eines Roboters gut handhabbar. Zur Sicherstellung, dass bei einer solchen automatisierten Bestückung die Leiterader des Anschlusskabels 3 tatsächlich in das Röhrchen eingeführt worden ist, sind im übrigen optische Verfahren anwendbar, die z.B. einen Spalt zwischen der Kabeleinführungsöffnung 4 und dem erweiterten Öffnungsbereich 7 des Röhrchens daraufhin überwachen, ob die Isolierung der Leiterader sichtbar wird.

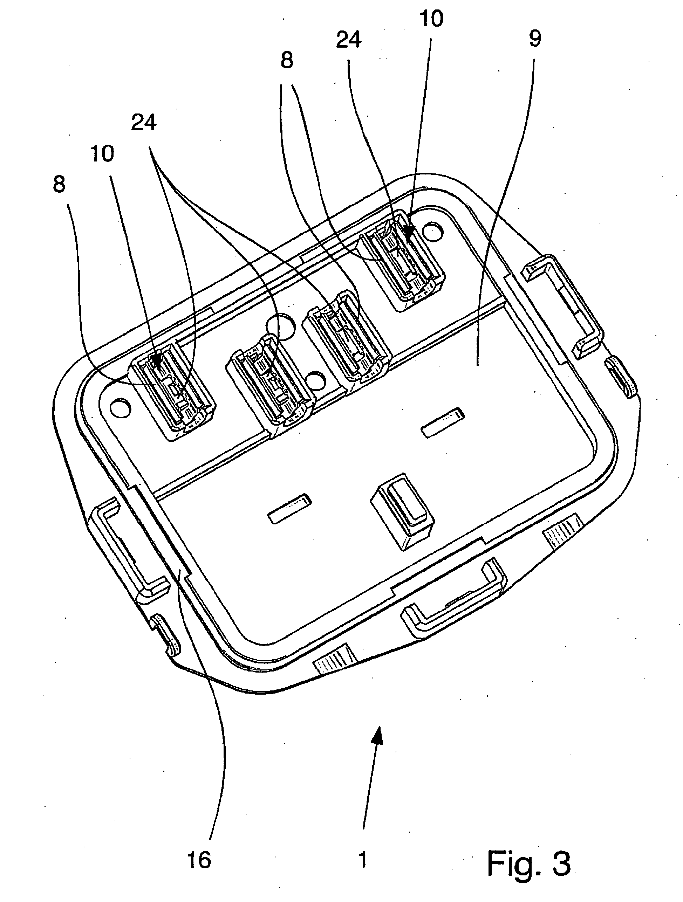

Aus Fig. 3 ist das Basisteil 1 der Paneldose gemäß dem bevorzugten Ausführungsbeispiel der Erfindung vor Aufsetzen des Funktionsteils 2 ersichtlich. Das Basisteil 1 weist vier Federklammern 8 auf. Diese Federklammern 8 sind jeweils oberhalb einer in dem Boden 9 des Basisteils 1 vorgesehenen Durchgangsöffnung 10 angeordnet. Die Anordnung der Durchgangsöffnungen 10 zueinander ist derart, dass diese sich jeweils oberhalb des Austrittsbereichs einer jeweiligen Anschlussleitung des Photovoltaik-Moduls befinden. Bei entsprechender Vorbereitung der Anschlussleitungen des Photovoltaik-Moduls kann das Basisteil 1 damit derart auf das Photovoltaik-Modul aufgesetzt werden, dass die Anschlussleitungen des Photovoltaik-Moduls, die häufig in Form von dünnen Flachbändern ausgestaltet sind, automatisch durch die Durchgangsöffnungen 10 eingeführt werden.

In jeder Durchgangsöffnungen 14 ist jeweils eine Umlenkzunge 24 vorgesehen, die dafür sorgt, dass eine im allgemeinen in Form eines Leiterbandes bzw. eines Flachbandes vorliegende Anschlussleitung, die im wesentlichen senkrecht aus einem Photovoltaik-Modul austritt, um einen Winkel von ca. 45° beim Einführen in die Durchgangsöffnung 10 umgelenkt wird. Eine Verbindung der Anschlussleitungen des Photovoltaik-Moduls mit den Anschlusseinrichtungen 6 des Funktionsteils 2 in Form von Röhrchen erfolgt nun beim Aufsetzen des Funktionsteils 2 auf das Basisteil 1, indem die Röhrchen in einer Richtung senkrecht zu ihrer Längserstreckung in die als Federklammern ausgebildete Verbindungseinrichtungen 8 eingesetzt werden. Mittels der Federklammern werden die Flachbänder damit auf verlässliche Weise direkt mit den Röhrchen kontaktiert, so dass die Verbindungseinrichtungen 8 selbst keinen besonderen Anforderungen an die elektrische Leitfähigkeit genügen müssen, insbesondere also aus einfachem Federbandstahl hergestellt sein können. Dabei gewährleisten die Umlenkzungen 24, dass die Flachbänder nicht einfach nach unten weggedrückt werden können, da die Flachbänder wegen der Umlenkzungen 24 im allgemeinen bereits schon seitlich an den Federklammern anliegen.

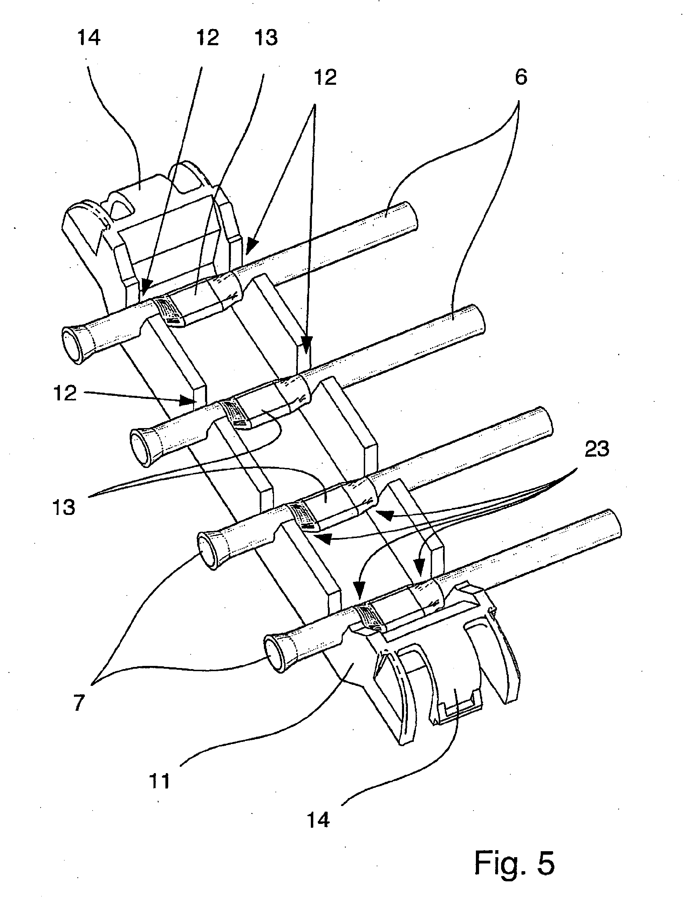

Um die Anschlusseinrichtungen 6 in Form von Röhrchen in dem Funktionsteil 2 zu halten, ist ein Trägerelement 11 vorgesehen, wie aus Fig. 2 und im Detail aus Fig. 5 ersichtlich. Dieses Trägerelement 11 weist Ausnehmungen 12 auf, in denen die Anschlusseinrichtungen 6 verrastet sind. Um einen Verdrehschutz der Anschlusseinrichtungen 6 zu gewährleisten und um darüber hinaus eine einfache Anschlussmöglichkeit für nicht weiter dargestellte Bypass-Dioden bereitzustellen, sind die Anschlusseinrichtungen 6 im Bereich des Trägerelements 11 jeweils mit einer Abflachung 13 versehen. Im Bereich dieser Abflachung 13 kann auf einfache und verlässliche Weise eine Bypass-Diode durch Verlöten oder Verschweißen befestigt werden. Diese Art der Befestigung ermöglicht es im Übrigen auch, ganz unterschiedliche Typen von Bypass-Dioden zu verwenden.

Als Verdrehschutz kann auch vorgesehen sein, dass der weiter oben beschriebene erweiterte Öffnungsbereich 7 der Röhrchen nach außen hin nicht kreisrund sondern eckig, z.B. quadratisch, ausgebildet, sind. Sind die entsprechenden Enden der Röhrchen in passende Ausnehmungen eingeführt, wird der genannte Verdrehschutz erreicht. Das gesamte Trägerelement 11 ist im Übrigen derart ausgestaltet, dass es mittels Federhaken 14 und diesen entsprechenden Vorsprüngen 15 im Funktionsteil 2 lösbar befestigt werden kann.

Damit wird die Möglichkeit erzielt, das Funktionsteil 2 der Paneldose mit all seinen Funktionseinrichtungen, wie Bypass-Dioden, Anschlusskabel 3 und Anschlusseinrichtungen 6, vollständig vorzukonfigurieren und elektrisch "endzuprüfen", so dass auf ein an dem Photovdltaik-Modul angebrachtes Basisteil 1 nur noch dieses vorkonfektionierte Funktionsteils 2 aufgesetzt werden muss, ohne dass weitere Arbeiten erfolgen müssen. Dies ist insbesondere insofern vorteilhaft, als dass, wie oben schon angedeutet, die Photovoltaik-Module einer Solaranlage im allgemeinen an nur schwer und gegebenenfalls auch unter Gefahr zugänglichen Bereichen angeordnet sind, wie auf Hausdächern, so dass auf diese Weise die dort zu erfolgende Arbeit auf ein Minimum reduziert wird. Insbesondere kann dazu das Basisteil 1 nämlich auch schon auf dem Photovoltaik-Modul vorinstalliert sein

Wie aus Fig. 3 ersichtlich, weist das Basisteil 1 eine umlaufende Dichtung 16 auf. Wird das Funktionsteil 2 auf das Basisteil 1 aufgesetzt, so wirkt die Dichtung 16 seitlich gegen die Seitenwände 17 des Funktionsteils 2. Dabei kommt das Funktionsteil 2 jedoch nicht direkt mit dem Basisteil 1 in Kontakt, da das Funktionsteil 2 Rippen 18 aufweist, mit denen es auf der Dichtung 16 aufliegt. Damit ergibt sich eine federnde Lagerung des Funktionsteils 2 auf dem Basisteil 1, so dass ein auf das Funktionsteil 2 einwirkender Stoß durch die Dichtung 16 in gewissem Maße abgefedert wird. Insbesondere bei tiefen Temperaturen und entsprechend sprödem Material können auf diese Weise unter Umständen Beschädigungen des Funktionsteils 2 und seiner Komponenten aber auch des Basisteils 1 bei entsprechender mechanischer Belastung vermieden werden.

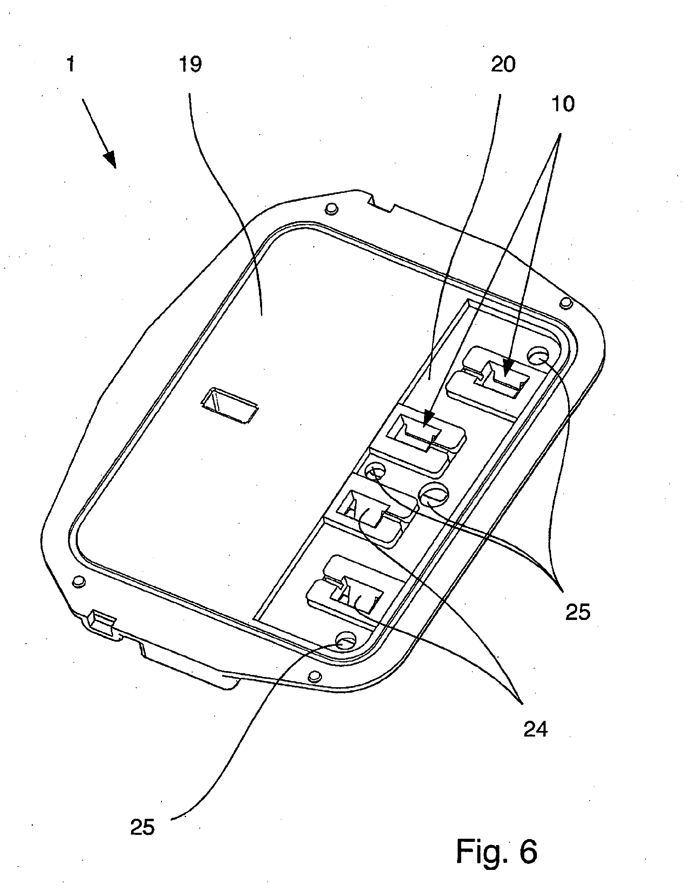

Aus Fig. 6 ist die zur Anbringung auf dem Photovoltaik-Modul vorgesehene Seite des Basisteils 1 ersichtlich. Auf seiner zur Anbringung auf dem Photovoltaik-Modul vorgesehenen Seite weist das Basisteil 1 einen Boden 19 auf, in dem eine vergießbare, dem Photovoltaik-Modul zugewandte Ausnehmung 20 vorgesehen ist. Diese Ausnehmung ist derart angeordnet, dass bei auf dem Photovoltaik-Modul angebrachtem Basisteil 1 der Austrittsbereich der Anschlussleitungen aus dem Photovoltaik-Modul vergießbar ist. Da beim Herausführen der Anschlussleitungen aus dem Photovoltaik-Modul eine Schutzschicht, die auch zur Abdichtung des Photovoltaik-Moduls dient, verletzt wird, kann auf diese Weise sichergestellt werden, dass die Abdichtung des Photovoltaik-Moduls erhalten bleibt und keine Feuchtigkeit eindringt. Vorliegend ist dabei vorgesehen, dass die vergießbare Ausnehmung 20 auch die in dem Boden 19 des Basisteils 1 vorgesehenen Durchgangsöffnungen 10 umfasst, so dass die Durchgangsöffnungen 10 mitausgegossen und damit abgedichtet werden. Um die Vergießbarkeit der Ausnehmung 20 auch bei auf dem Photovoltaik-Modul aufgesetztem Basisteil 1 zu gewährleisten, sind im Boden 19 das Basisteils zusätzliche Öffnungen 25 vorgesehen, die zum Zuführen des Vergießmittels bzw. als Steiger verwendet werden können.

Damit die Paneldose teilweise z.B. unter einen das Photovoltaik-Modul begrenzenden Metallrahmen geschoben werden kann, so dass eine möglichst randnahe und damit platzsparende Installation auf dem Photovoltaik-Modul erzielt wird, ist die Höhe des Funktionsteils 2 in einem Randbereich 21 geringer ist als in seinem restlichen Bereich. Das Funktionsteil weist also einen Absatz 22 auf. Damit ist auch verbunden, dass gemäß dem vorliegend beschriebenen bevorzugten Ausführungsbeispiel der Erfindung die als Röhrchen vorgesehenen Anschlusseinrichtungen 6 nicht gerade verlaufen, sondern einen Bereich 23 aufweisen, in dem eine Achsverschiebung vorgesehen ist.

## Patentansprüche

1. Paneldose, zum elektrischen Anschluss eines Photovoltaik-Moduls für eine Solaranlage, mit einem Basisteil (1) zum Anbringen auf dem Photovoltaik-Modul und zum elektrischen Anschließen einer Anschlussleitung des Photovoltaik-Moduls und mit einem weiteren Teil zum Aufsetzen auf das Basisteil (1), wobei das weitere Teil als Funktionsteil (2) ausgestaltet ist, das wenigstens eine eine elektrische und/oder elektronische Funktion übernehmende Funktionseinrichtung aufweist, wobei als Funktionseinrichtung eine Anschlusseinrichtung (6) für den Anschluss eines Anschlusskabels (3) vorgesehen ist, wobei das Anschlusskabel der Paneldose verbraucherseitig oder von einem anderen Photovoltaik-Modul her zuführbar ist, **dadurch gekennzeichnet, dass** die Anschlusseinrichtung (6) ein Röhrchen aufweist, in das eine Leitungsader des Anschlusskabels (3) einführbar ist.

2. Paneldose nach Anspruch 1, **dadurch gekennzeichnet, dass** das Funktionsteil (2) ausschließlich mittels des Basisteils (1) an dem Photovoltaik-Modul befestigbar ist.

3. Paneldose nach Anspruch 1 oder 2, **dadurch gekennzeichnet, dass** als Funktionseinrichtung eine Bypass-Diode vorgesehen ist.

4. Paneldose nach einem der Ansprüche 1 bis 3, **dadurch gekennzeichnet, dass** als Funktionseinrichtung eine elektrische oder elektronische Schutzschaltung für das Photovoltaik-Modul vorgesehen ist.

5. Paneldose nach einem der Ansprüche 1 bis 4, **dadurch gekennzeichnet, dass** als Funktionseinrichtung ein Anschlusskabel (3) für das Photovoltaik-Modul vorgesehen ist.

6. Paneldose nach einem der Ansprüche 1 bis 5, **dadurch gekennzeichnet, dass** die Leitungsader im Röhrchen mittels einer Verkrimpung elektrisch kontaktiert und vorzugsweise auch gehalten ist.

7. Paneldose nach einem der Ansprüche 1 bis 6, **dadurch gekennzeichnet, dass** im Basisteil (1) zum elektrischen Anschließen der Anschlussleitung des Photovoltaik-Moduls eine Verbindungseinrichtung (8) vorgesehen ist, mittels derer die Anschlusseinrichtung (6) mit der Anschlussleitung verbindbar ist.

8. Paneldose nach Anspruch 7, **dadurch gekennzeichnet, dass** als Verbindungseinrichtung (8) eine Federklammer vorgesehen ist, mittels derer die Anschlussleitung an die Anschlusseinrichtung (6) anpressbar ist.

9. Paneldose nach einem der Ansprüche 1 bis 8, **dadurch gekennzeichnet, dass** das Funktionsteil (2) als Haube ausgebildet ist.

10. Paneldose nach einem der Ansprüche 1 bis 9, **dadurch gekennzeichnet, dass** durch Aufsetzen des Funktionsteils (2) auf das Basisteil (1) die Paneldose verschließbar ist.

11. Paneldose nach einem der Ansprüche 1 bis 10, **dadurch gekennzeichnet dass** das Basisteil (1) auf seiner zur Anbringung auf dem Photovoltaik-Modul vorgesehenen Seite einen Boden (19) mit einer vergießbaren, dem Photovoltaik-Modul zugewandten Ausnehmung (20) aufweist.

12. Paneldose nach Anspruch 11, **dadurch gekennzeichnet, dass** die vergießbare Ausnehmung (20) derart angeordnet ist, dass bei auf dem Photovoltaik-Modul angebrachtem Basisteil (1) der Austrittsbereich der Anschlussleitungen aus dem Photovoltaik-Modul vergießbar ist.

13. Paneldose nach Anspruch 11 oder 12, **dadurch gekennzeichnet, dass** die vcrgießbare Ausnehmung (20) eine in dem Boden (19) des Basisteils (1) vorgesehene Durchgangsöffnung (10) für die Anschlussleitung des Photovoltaik-Moduls umfasst.

14. Paneldose, zum elektrischen Anschluss eines Photovohaik-Moduls für eine Solaranlage, mit einem Basisteil zum Anbringen auf dem Photovoltaik-Modul und zum elektrischen Anschließen einer Anschlussleitung des Photovoltaik-Moduls und mit einem weiteren Teil zum Aufsetzen auf das Basisteil nach einem der Ansprüche 1 bis 13, **dadurch gekennzeichnet, dass** zur Abdichtung der Paneldose zwischen dem Basisteil (1) und dem weiteren Teil eine Dichtung (16) vorgesehen ist, die derart ausgebildet und angeordnet ist, dass ein auf das weitere Teil l ausgeübter Stoß abgefedert wird.

15. Paneldose nach Anspruch 14, **dadurch gekennzeichnet, dass** die Dichtung (16) seitlich gegen die Seitenwände (17) des weiteren Teils abdichtet und das weitere Teil Rippen (18) aufweist, mit denen es derart auf der Dichtung (16) aufliegt, dass sich die Seitenwände (17) des weiteren Teils im Abstand zum Basisteil (1) befinden.

## Claims

1. Panel box for the electrical connection of a photovoltaic module for a solar installation, having a base part (1) for mounting on the photovoltaic module and for electrically connecting a connection line of the photovoltaic module, and having a further part for placing on the base part (1), with the further part being designed as a functional part (2) which has at least one functional device which performs an electrical and/or electronic function, with the functional device provided being a connection device (6) for the connection of a connection cable (3), it being possible for the connection cable to be fed to the panel box by a consumer or by another photovoltaic module, **characterized in that** the connection device (6) has a tube into which a cable core of the connection cable (3) can be inserted.

2. Panel box according to Claim 1, **characterized in that** the functional part (2) can be attached to the photovoltaic module solely by means of the base part (1).

3. Panel box according to Claim 1 or 2, **characterized in that** the functional device provided is a bypass diode.

4. Panel box according to one of Claims 1 to 3, **characterized in that** the functional device provided is an electrical or electronic protection circuit for the photovoltaic module.

5. Panel box according to one of Claims 1 to 4, **characterized in that** the functional device provided is a connection cable (3) for the photovoltaic module.

6. Panel box according to one of Claims 1 to 5, **characterized in that** the cable core in the tube is electrically contacted, and preferably also held, by a crimp connection.

7. Panel box according to one of Claims 1 to 6, **characterized in that** a connecting device (8) is provided in the base part (1) for electrically connecting the connection line of the photovoltaic module, it being possible to connect the connection device (6) to the connection line by means of the said connecting device.

8. Panel box according to Claim 7, **characterized in that** the connecting device (8) provided is a spring clip by means of which the connection line can be pressed onto the connection device (6).

9. Panel box according to one of Claims 1 to 8, **characterized in that** the functional part (2) is in the form of a hood.

10. Panel box according to one of claims 1 to 9, **characterized in that** the panel box can be closed by placing the functional part (2) on the base part (1).

11. Panel box according to one of Claims 1 to 10, **characterized in that** the base part (1) has, on its side which is provided for mounting on the photovoltaic module, a base (19) with a recess (20) which can be caulked and faces the photovoltaic module.

12. Panel box according to Claim 11, **characterized in that** the recess (20) which can be caulked is arranged in such a way that, when the base part (1) is mounted on the photovoltaic module, the outlet region of the connection lines out of the photovoltaic module can be caulked.

13. Panel box according to Claim 11 or 12, **characterized in that** the recess (20) which can be caulked comprises a passage opening (10), which is provided in the base (19) of the base part (1), for the connection line of the photovoltaic module.

14. Panel box for the electrical connection of a photovoltaic module for a solar installation, having a base part for mounting on the photovoltaic module and for electrically connecting a connection line of the photovoltaic module and having a further part for placing on the base part according to one of Claims 1 to 13, **characterized in that** a seal (16) is provided for sealing off the panel box between the base part (1) and the further part, the said seal being formed and arranged in such a way that an impact which is exerted on the further part is cushioned.

15. Panel box according to Claim 14, **characterized in that** the seal (16) is sealed off from the side walls (17) of the further part at the side, and the further part has ribs (18) by way of which it rests against the seal (16) in such a way that the side walls (17) of the further part are at a distance from the base part (1).

## Revendications

1. Boîte de raccordement, destinée au raccordement électrique d'un module photovoltaïque pour une installation solaire, avec une partie de base (1) destinée à être appliquée sur le module photovoltaïque et à raccorder électriquement une ligne de raccordement du module photovoltaïque et avec une autre partie destinée à être montée sur la partie de base (1), l'autre partie étant conçue comme une partie fonctionnelle (2) qui comporte au moins un dispositif fonctionnel se chargeant d'une fonction électrique et/ou électronique, un dispositif de raccordement (6) étant prévu comme dispositif fonctionnel en vue du raccordement d'un câble de raccordement (3), le câble de raccordement de la boîte de raccordement pouvant provenir du côté du consommateur ou d'un autre module photovoltaïque, **caractérisée en ce que** le dispositif de raccordement (6) comporte un petit tube dans lequel peut être introduit un conducteur du câble de raccordement (3).

2. Boite de raccordement selon la revendication 1, **caractérisée en ce que** la partie fonctionnelle (2) peut être fixée exclusivement au moyen de la partie de base (1) au module photovoltaïque.

3. Boîte de raccordement selon la revendication 1 ou 2, **caractérisée en ce qu'**une diode de dérivation est prévue comme dispositif fonctionnel.

4. Boîte de raccordement selon l'une des revendications 1 à 3, **caractérisée en ce qu'**un dispositif de protection électrique ou électronique pour le module photovoltaïque est prévu comme dispositif fonctionnel.

5. Boîte de raccordement selon l'une des revendications 1 à 4, **caractérisée en ce qu'**un câble de raccordement (3) pour le module photovoltaïque est prévu comme dispositif fonctionnel.

6. Boîte de raccordement selon l'une des revendications 1 à 5, **caractérisée en ce que** le conducteur dans le petit tube est mis en contact électrique et aussi de préférence maintenu au moyen d'un sertissage.

7. Boîte de raccordement selon l'une des revendications 1 à 6, **caractérisée en ce qu'**un dispositif de liaison (8) au moyen duquel le dispositif de raccordement (6) peut être relié à la ligne de raccordement est prévu dans la partie de base (1) en vue du raccordement électrique de la ligne de raccordement du module photovoltaïque.

8. Boîte de raccordement selon la revendication 7, **caractérisée en ce qu'**une bride à ressort au moyen de laquelle la ligne de raccordement peut être pressée contre le dispositif de raccordement (6) est prévue comme dispositif de liaison (8).

9. Boîte de raccordement selon l'une des revendications 1 à 8, **caractérisée en ce que** la partie fonctionnelle (2) est conçue comme un capot.

10. Boîte de raccordement selon l'une des revendications 1 à 9, **caractérisée en ce que** la boîte de raccordement peut être fermée en posant la partie fonctionnelle (2) sur la partie de base (1).

11. Boîte de raccordement selon l'une des revendications 1 à 10, **caractérisée en ce que** la partie de base (1) comporte, sur son côté prévu pour l'application sur le module photovoltaïque, un fond (19) avec un évidement (20) qui est du côté du module photovoltaïque et qui peut être rempli par coulée.

12. Boîte de raccordement selon la revendication 11, **caractérisée en ce que** l'évidement (20) qui peut être rempli par coulée est agencé de telle sorte que, lorsque la partie de base (1) est appliquée sur le module photovoltaïque, la zone de sortie des lignes de raccordement hors du module photovoltaïque peut être remplie par coulée.

13. Boîte de raccordement selon la revendication 11 ou 12, **caractérisée en ce que** l'évidement (20) qui peut être rempli par coulée comprend une ouverture de passage (10) prévue dans le fond (19) de la partie de base (1) pour la ligne de raccordement du module photovoltaïque.

14. Boîte de raccordement, destinée au raccordement électrique d'un module photovoltaïque pour une installation solaire, avec une partie de base destinée à être appliquée sur le module photovoltaïque et à raccorder électriquement une ligne de raccordement du module photovoltaïque et avec une autre partie destinée à être montée sur à partie de base selon l'une des revendications 1 à 13, **caractérisée en ce qu'**il est prévu pour l'étanchéification de la boîte de raccordement entre la partie de base (1) et l'autre partie un joint d'étanchéité (16) qui est conçu et agencé de telle sorte qu'un choc exercé sur l'autre partie est amorti.

15. Boîte de raccordement selon la revendication 14, **caractérisée en ce que** le joint d'étanchéité (16) est étanchéifié latéralement par rapport aux parois latérales (17) de l'autre partie et **en ce que** l'autre partie comporte des nervures (18) avec lesquelles elle est posée de telle sorte sur le joint d'étanchéité (16) que les parois latérales (17) de l'autre partie se trouvent à une certaine distance de la partie de base (1).
